# EUROPEAN PATENT APPLICATION

(11) **EP 1 035 635 A2**
(43) Date of publication of application: **13.09.2000**
(21) Application number: 00301949.4
(22) Date of filing: 09.03.2000
(51) Int. Cl.: H02K 21/00

(54) **Motor generator developing low torque at high-speed revolutions without cogging**

(30) Priority: 12.03.1999 JP 6615099
(71) Applicant: ISUZU CERAMICS RESEARCH INSTITUTE CO., LTD., Fujisawa-shi, Kanagawa-ken (JP)
(72) Inventor: Kawamura, Hideo, Kouza-gun, Kanagawa-ken 253-0105 (JP)
(74) Representative: Jenkins, Peter David

(57) **Abstract**

A motor generator is disclosed, comprising a cylindrical controller member(7) arranged between a permanent-magnet member(5) and a stator core(15). Circumferentially moving the cylindrical controller member(7) relatively of a stator core(15) contributes to achieving a low torque at high-speed revolutions with no occurrence of cogging. The cylindrical controller member (7) is supported in a frame(1) for relative rotation inside the stator core(15) and composed of permeable pieces(17) and non-permeable pieces(18), which alternate in arrangement circularly. The cylindrical controller member(7) is moved circumferentially by means of a stepping motor(8) according to the operational phase of the rotor(3). To get the rotor generator stopped, the permeable pieces(17) of the cylindrical controller member (7) are moved to an angular position where they face adjacent teeth(20) of the stator core(15) across slots(21) formed between the adjacent teeth(20), allowing the magnetic flux from the permanent-magnet member(5) to pass uniformly in the circumferential direction to thereby suppressing the occurrence of cogging.

## Description

The present invention relates to an electromechanical energy converter or a motor generator able to develop a low torque at high-speed revolutions with no occurrence of cogging, comprising a rotor of permanent magnets and a stator arranged around the rotor.

While the motor generators are conventionally of the direct-current machines and the induction machines, the motor generators of permanent-magnet type, in recent years, have been extensively used in diverse fields of industries because they are simple in construction and, however, higher in dynamoelectric efficiency.

In a motor generator, the frequency or rpm of the rotor increases as voltages and amperes rise, so that the rotor is subject to much more centrifugal force. The rotor will result in a possible breakage or burst if the centrifugal force becomes too large. This requires the motor generator having a rotor sufficient in strength resistant to the much more centrifugal force. To deal with the requirement, a prior rotor of this type has been developed, which is enhanced in mechanical strength by reinforcing means such as reinforcing annular members encompassing tightly around the perimeter of the permanent magnets composing the rotor.

Disclosed in, for example, Japanese Patent Laid-Open No. 272850/1987 is permanent-magnet rotating machine having a rotor in which permanent magnets are arranged and containers are provided to contain therein magnetic material flowing radially owing to the revolution of the rotor to thereby form magnetic or field poles.

Moreover, another prior art of an alternating-current motor generator developing a high-power output is disclosed in Japanese Patent Laid-Open No. 236260/1995, in which a magnetic flux density is controlled in proportion to the rpm of the rotor to adjust adequately a value of the generated amperes or voltages. A control ring is arranged between the rotor and the stator for rotation relatively of them and further a permeable member is provided in such a manner as to come in and out contact with the control ring.

In the meantime, automotive engines, especially, diesel engines are provided with a particulate trap to extract particulate products of the exhaust from the engine to clean the exhaust. The particulate trap has usually heating means to burn away the particulates, mainly in the form of carbon and partially burned hydrocarbons (HC) trapped on a filter, thereby regenerating or reactivating the filter. The heating means is to be energized with electric power from a generator or battery equipped in the automotive vehicle, nevertheless there is no guarantee in vehicle that sufficient electric power is always ready for heating. To cope with this, the motor generator to be mounted on the automotive vehicle, in addition to high efficiency and compact construction, is desired to help ensure an enough electric power even under a low-speed operation of the engine.

On the other hand, the global trend of keeping the earth environment clean requires the much more CO₂ reduction and makes it ever more accelerative to develop diverse varieties of technology for improving the rate of consumption of fuel by an automobile. Among the more recent advances in controlling the possible sources of atmospheric pollution from the automobile is a hybrid vehicle, which requires developing an electric motor capable of ensuring a considerable great torque even if the engine is operated at low-speed ranges.

Although most permanent-magnet motor generators are simple in construction and able to provide a high output performance, they can not be expected to deliver a considerable high torque when operated at low-speed revolutions. That is to say, as the permanent magnets in the motor generator are constant in magnetic force, only making the motor generator itself larger in size to intensify the magnetic force of the permanent magnets may provide the much electromagnetic force under the low-speed operation. As the area where the magnetic flux occurs in the permanent magnet is dependent on the size of the permanent magnet, increasing the rpm of the rotor makes the magnetic flux density higher to generate the great electric power output, whereas the low rpm of the rotor causes less magnetic flux density, thereby resulting in lowering the electric power output.

The diverse constructions of the motor generator have been heretofore proposed to intensify the magnetic force. At the present time, however, no predominant construction has been born.

While the motor generators having the permanent-magnet rotor are adapted for high speed and compact construction, it has been very tough to use them in applications such as machine tools, where the generators should be inevitably made complicated in construction to cope with the operation under severe working condition or atmosphere. To help ensure the much efficient operation of the motor generator having incorporated the compact rotor therein, it is preferred to make the clearance, or air gap between the permanent magnets and the stator as small as possible. To this end, it becomes necessary to finish with accuracy the periphery of the rotor.

In permanent-magnet motor generators, as the magnetic flux cannot be reduced or weakened at high-speed revolutions, the rotor is apt to lapse into a considerable high output with an undesirable high torque condition at the high speed operations. In contrast, such a phenomenon may happen that much current has to be applied counter to an opposite current that is induced by the magnetic forces. Especially in the permanent-magnet motor generators used for machinery such as machine tools, industrial machines or the like, the rotor is apt to have frequently a variation in revolution at starting and/or stopping. In other words, the undesirable condition commonly referred to as cogging happens, which is variations recurred in torque and speed for the motors and generators due to variations in magnetic flux as the rotor poles move past the stator poles. The cogging causes adverse major problems on the machinery operated by the motor generators. Thus, although it is very critical to develop a technique to keep the motor generator from the occurrence of cogging, there has been heretofore no means for suppressing the cogging, which is simple in construction and small in spacing for accommodation.

For most ordinary motor generators, the stator core is made in the form of T-teeth to focus or concentrate the magnetic forces of the rotor as dense as possible. The windings are placed in slots, each of which exists between any two adjoining teeth. That is, the windings are wound up around the teeth through the slots between the teeth.

When the rotor is stopping in the motor generator, circumferential center areas of the permanent-magnet pieces around the rotor each lie in a location near the center of a path for magnetic flux of the associated teeth of the stator core, where the flow of the magnetic flux is maximum. Once the rotor is allowed to rotate, the circumferential center areas of the permanent-magnet pieces around the rotor come out of the locations near the centers of the paths for magnetic flux of the stator teeth. At this event, the magnetic flux acts to keep the rotor against rotation. At a later time, where the rotor moves ahead, the rotor is attracted to subsequent stator poles and thus accelerated in revolving motion so as to come in alignment of the magnetic flux between the rotor and stator poles. The recurrent deceleration and acceleration of the rotor caused as described just above are recognized as cogging.

It will be thus understood that the cogging, which might occur in the motor generator, may be eliminated by a technical concept of moving the rotor with keeping the magnetic flux lines constant at all times. This will be for example accomplished by an arrangement in which the permanent-magnet rotor is driven within a hollow cylinder made of iron allover the periphery thereof.

The present invention has been derived from the conception that no cogging occurs in a motor generator in which a rotor is allowed to turn in a cylindrical enclosure made entirely of iron. It is, therefore, a primary aim of the present invention to provide a motor generator having ant-cogging means comprising a cylindrical controller member arranged inside the stator core, the cylindrical controller member being composed of permeable pieces and non-permeable pieces, which alternate in arrangement circularly along the inner periphery of the stator core, wherein the cylindrical controller member is moved circumferentially with respect to the stator core to angular positions selected in accord with staring or stopping the rotor. Once the rotor is rotating, the cylindrical controller member is set in an angular positions where the permeable pieces come in circumferential alignment with the teeth of the stator core. In contrast, when stopping the rotor, the cylindrical controller member is moved to another position where the permeable pieces and teeth of the stator core, in combination, may provide magnetic paths existing around the entire circumference of the rotor to distribute uniformly the flow of magnetic flux around the entire air gap, whereby the rotor is allowed to rotate smoothly with no occurrence of cogging.

The present invention is concerned with a motor generator capable of developing a low torque at high-speed revolutions with no occurrence of cogging, comprising a rotor mounted on a rotor shaft supported for rotation in the frame, the rotor being provided with permanent-magnet pieces arranged in juxtaposition around the rotor shaft, a stator attached to the frame to surround an outer periphery of the rotor, a cylindrical controller member attached to the frame inside the stator for rotation relative to the stator, and means for driving the cylindrical controller member with respect to the stator in accord with driving phases of the rotor, wherein the stator is made with slots arranged circumferentially, with remaining teeth between the slots in a form of teeth of a comb, and the cylindrical controller member is composed of permeable pieces and non-permeable pieces interposed between the permeable pieces, which are assembled in a form of a cylinder, the permeable pieces each having a circumferential length enough to face the adjoining teeth across the slot between the adjoining teeth.

In accordance with one aspect of the present invention a motor generator is disclosed, wherein the cylindrical controller member, on starting the rotor to move, is turned in a direction of rotation of the rotor to change a flow of magnetic flux between the permanent-magnet pieces and the stator so as to follow the cylindrical controller member along the direction of the rotation to thereby get the rotor started, and once the rotor is rotating, high-speed revolutions of the rotor is achieved due to variations in magnetic field. Moreover, upon stopping the rotor from the rotation, the cylindrical controller member is turned in the direction of rotation of the rotor to bring the permeable pieces of the cylindrical controller member into positions where they span across the slots between the adjacent teeth of the stator, focussing the magnetic flux coming from the permanent-magnet pieces, whereby the rotor is stopped smoothly.

In accordance with another aspect of the present invention a motor generator is disclosed, wherein the rotor has a magnetic path core arranged surrounding an outer periphery of the rotor shaft, the magnetic path core being surrounded circularly with the permanent-magnet pieces around the outer periphery thereof, and a reinforcing member mounted surrounding around an outer periphery of the permanent-magnet pieces, while the stator has a stator core attached to the frame and provided around an inside periphery thereof with slots so as to leave teeth spaced away from each other, and stator coils wound up on the teeth through the slots.

In accordance with another aspect of the present invention a motor generator is disclosed, wherein the means for driving the cylindrical controller member is comprised of a stepping motor mounted on the frame, an output gear attached to an output shaft of the stepping motor, and a gear meshed with the output gear and fixed on an outer periphery of an end of the cylindrical controller member extending outwardly from the frame.

In accordance with the present invention a motor generator is disclosed, wherein circumferential lengths of the permeable pieces and non-permeable pieces of the cylindrical controller member are determined so as to ensure that the magnetic flux coming from the permanent-magnet member and entering the teeth of the stator core through non-permeable pieces in the cylindrical controller member becomes nearly equal in magnetic flux density with the magnetic flux entering the teeth of the stator core through the permeable pieces in the cylindrical controller member, when the cylindrical controller member comes in a phase where any permeable piece of the cylindrical controller member comes to face any two adjacent teeth of the stator core across any associated slot between the adjacent teeth on starting and stopping the rotation of the rotor.

In accordance with the present invention a motor generator is disclosed, wherein once the rotor is rotating, the permeable pieces of the cylindrical controller member are brought into a location where they confront the teeth of the stator core, allowing the magnetic flux to come from the permanent-magnet pieces and enter the teeth of the stator core through the permeable pieces to thereby help ensure the smooth rotation of the rotor.

Since the motor generator of the present invention constructed as explained above includes the cylindrical controller member providing the low torque at low-speed revolutions with no cogging, when starting or stopping the rotor, the controller unit issuing instructions in accord with rotational phases of the rotor actuates the driving means such as a stepping motor, which in turn rotates the cylindrical controller member relatively of the stator core. This causes the permeable pieces of the cylindrical controller member to come in face the adjoining teeth across the slots between the adjoining teeth, thereby allowing the magnetic flux coming from the permanent-magnet pieces to flow in uniform distribution along the circumferential direction whereby the rotor may be gently get started or stopped with no occurrence of cogging. In contrast, upon high-speed revolutions of the rotor, the cylindrical controller member is moved to make the permeable pieces offset to the positions where their centers come in between the adjoining teeth. Thus, no magnetic forces enter the teeth with the result of decreasing the torque of the motor. The higher the rpm of the rotor is, the less is the developed torque. This may realize the motor generator of ideal operating characteristics.

Moreover, with the rotor being under normal operating condition, the controller unit actuates again the stepping motor to move the cylindrical controller member, which is arranged between the permanent-magnet pieces and stator, to another angular position where much magnetic flux coming from the permanent-magnet pieces is permitted to flow into the teeth of the stator core, thereby helping ensure the good operating condition.

The motor generator of the present invention may be well designed for high-speed generators to convert mechanical energy into electric energy or high-speed motors to convert electrical energy into mechanical energy, and also easily adapted to the generators in the cogeneration system, hybrid vehicles and motors used in the machine tools. The motor generator of the present invention may well withstand the high revolution of, for example, 60000 rpm and may be produced with less production cost as well as simple in construction.

Moreover, the motor generator is adapted to deal with the design requirements from large to small machines with flexibility because the permanent-magnet member is inexpensive to produce irrespective of the desired scale of the rotor. In addition, as the permanent-magnet member is composed of permanent-magnet pieces, which are arrange in the form of a cylinder, the permanent-magnet pieces themselves are inexpensive to produce and the permanent-magnet members of diverse diameters may be easily assembled by simply changing the number of the permanent-magnet pieces to be used.

Other aims and features of the present invention will be more apparent to those skilled in the art on consideration of the accompanying drawings and following specification wherein are disclosed preferred embodiments of the present invention with understanding that such variations, modifications and elimination of parts may be made therein as fall within the scope of the appended claims without departing from the scope of the invention.

Embodiments of the present invention will now be described by way of example only, with reference to the accompanying drawings, in which:-
FIG. 1 is an axial sectional view showing a preferred embodiment of a motor generator in accordance with the present invention, which is able to develop a low torque at high-speed revolutions with no occurrence of cogging:
FIG. 2 is a cross-sectioned view of the motor generator shown in FIG. 1 and is taken along the line I - I of FIG. 1 to illustrate the circumferential relation of a stator core with a cylindrical controller member at the instant a rotor is stopped:
FIG. 3 is a cross-sectioned view of the motor generator shown in FIG. 1 and is taken along the line I - I of FIG. 1 to illustrate the circumferential relation of a stator core with a cylindrical controller member at the phase where a rotor is rotating: and
FIG. 4 is a schematic illustration explanatory of a driving means for the cylindrical controller member that provides anti-cogging means to suppress the cogging phenomenon.

The following will explain in detail a preferred embodiment of a motor generator in accordance with the present invention with reference to the accompanying drawings, which makes it possible to develop a low torque at high-speed revolutions with no occurrence of cogging.

The motor generator of the present invention is well adapted to a compact motor generator to produce electric power through a rotor shaft 2 coupled and driven with an engine in cogeneration systems or in a hybrid vehicles, or to operate machinery such as machine tools under instructions of a controller unit.

The motor generator of the present invention mainly has a frame 1 containing therein a rotor and a stator and providing a path for magnetic force, a rotor shaft 2 supported in the frame 1 for rotation through a pair of ball bearings 13, an armature or rotor 3 composed of a permanent-magnet member 5 mounted about the rotor shaft 2, a stator 4 arranged spaced away from the rotor 3 and fixed to the frame 1, a cylindrical controller member 7 arranged inside the stator 4 and mounted to the frame 1 through bearings 19 for rotation relative to the stator 4, and a driving means to make the cylindrical controller member 7 move relatively of the stator 4 in accordance with an operating phase of the rotor 3.

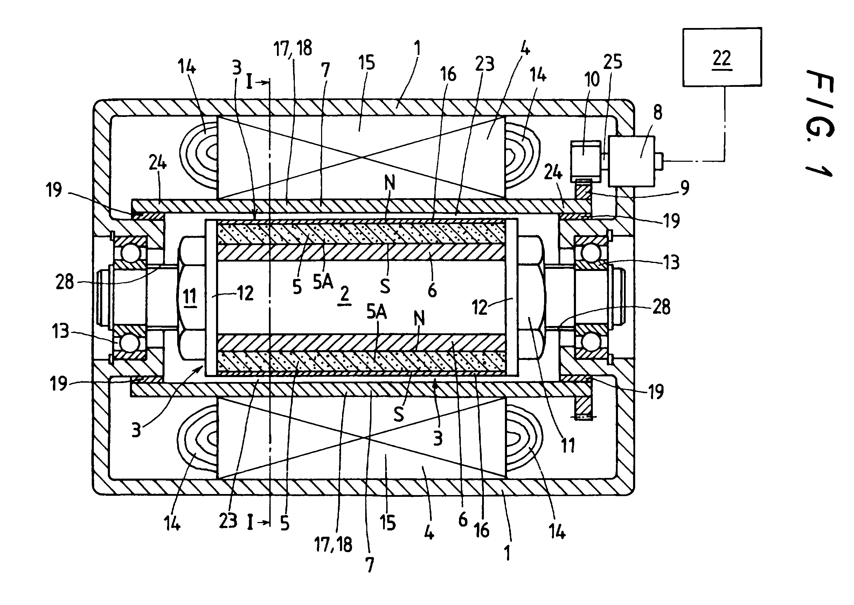

The cylinder controller member 7, although shown mounted to the frame 1 for rotation through the bearings 19 in FIG. 1, may be mounted to a stator core 15 of the stator 4 for rotation by fitting it for rotation to the stator core 15 of the stator 4 with no use of the bearings 19.

The rotor 3 is comprised of a magnetic path core 6 arranged over the outer periphery of the rotor shaft 2, a permanent-magnet member 5 arranged around the magnetic path core 6, and a non-magnetic reinforcing member 16 secured about the permanent-magnet member 5. In contrast, the stator 4 is comprised of a stator core fixed to the frame 1 and provided with stator teeth 20 remaining spaced away from each other between notches or slots 21 punched around the inside periphery of the stator in the form of a comb, and stator coils wounded up on the teeth 20 so as to be accommodated in the slots 21. The permanent-magnet member 5 is composed of permanent-magnet pieces 5A extending axially of the rotor and arranged in circumferentially juxtaposed relation, and non-magnetic pieces 27 interposed between any adjoining permanent-magnet pieces 5A. The magnetic path core 6 may be formed of magnetic permeable pieces and non-magnetic pieces, which alternate in position circularly in the form of a cylinder.

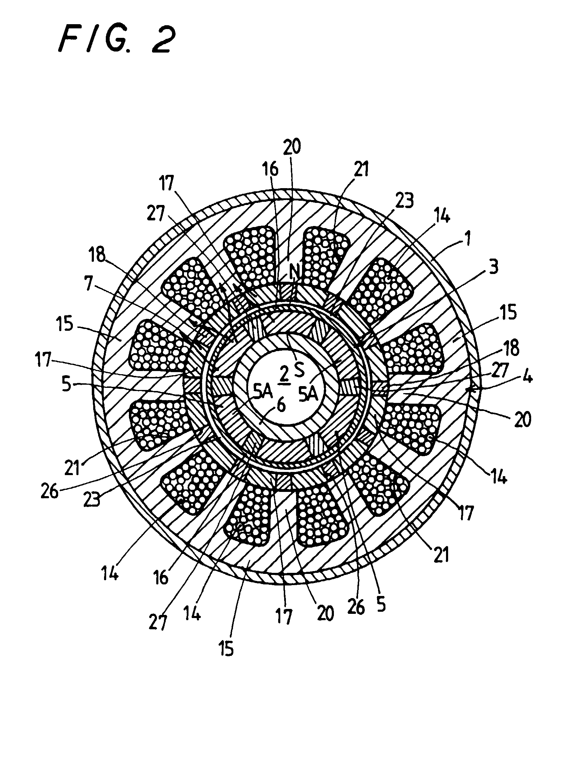

The rotor 3 is supported against rotation on the rotor shaft 2 at a desired place by means of fastening nuts 11, 11, which mite with threads 28 around the rotor shaft 2 to clamp the rotor at the axially opposing ends thereof through keep plates 12, 12. The rotor shaft 2 has at its one end, for example, an input pulley, not shown in the drawings, which is in turn connected drivingly to an output shaft of the engine through an endless belt. In the stator 4, as shown in FIG. 2, the stator coils 14 are accommodated in the slots 21 formed in the stator core 15 built up of thin sheet laminations. The cylindrical controller member 7 is arranged in closely approaching the inside peripheries of the slots 21 in the stator core 15 in such a manner as to make rotation relative to the stator core 14. It will be thus understood that an air gap is provided between the rotor 3 and cylindrical controller member 7.

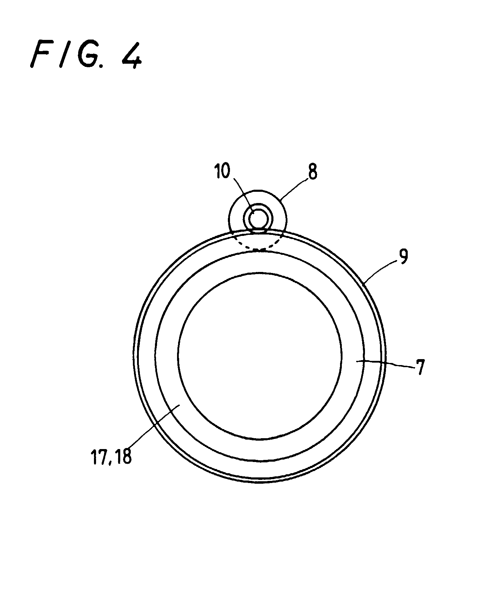

A driving means to move the cylindrical controller member 7 is, as apparent from FIG. 4, composed of a stepping motor 8 mounted to the frame 1, an output gear 10 attached to an output shaft 25 of the stepping motor 8, and a gear 9 meshed with the output gear 10, the gear 9 being provided around an outer periphery of an axial extension 24 of the cylindrical controller member 7. The stepping motor 8 is actuated with instructions issued from a controller unit 22 in accordance with the rotating phase of the rotor 3. The stepping motor 8 makes the cylindrical controller member 7 rotate stepwise in either constant direction.

The motor generator constructed as described just above is capable of developing the low torque at high-speed revolutions with no occurrence of cogging. Thus, to get it started, making the cylindrical controller member 7 rotate relative to the stator 4 in the direction equal with the rotor 3 causes the magnetic flux to change, thereby starting the rotor 3 to move. Once the rotor 3 is rotating, the high-speed revolutions of rotor 3 may be achieved due to the variations in magnetic field.

The anti-cogging means to make it possible to develop a low torque at high-speed revolutions with no cogging may be realized by the cylindrical controller member 7 as explained above. The cylindrical controller member 7 is comprised of magnetic permeable pieces 17 arranged to provide clearances 26 in which non-permeable pieces 18 are accommodated, the clearances 26 being spaced circumferentially away from each other in correspondence with the stator teeth 20 of the stator core 15. That is to say, the cylindrical controller member 7 is formed of the magnetic permeable pieces 17 and non-permeable pieces 18, which alternate in position circularly in the form of a cylinder. Each magnetic permeable pieces 17 has a circumferential length sufficient to span across any one tooth 20 of the stator core 15 in the stator 4, while each non-permeable piece 18 interposed between any two adjoining permeable pieces 17 has a circumferential length identical with or somewhat less than any one tooth 20.

The circumferential lengths of the permeable pieces 17 and non-permeable pieces 18 of the cylindrical controller member 7 are determined with respect to the slots 21 in the stator core 15 so as to ensure that the magnetic flux coming from the permanent-magnet member 5 and entering the teeth 20 of the stator core 15 through non-permeable pieces 18 in the clearances 26 of the cylindrical controller member 7 becomes nearly equal in magnetic flux density with the magnetic flux entering the teeth 20 through the permeable pieces 17, when the cylindrical controller member 7 comes in a rotating phase shown in FIG. 2, where any permeable piece 17 of the cylindrical controller member 7 comes to confront any two adjacent teeth 20 of the stator core 15 so as to extend astride any associated slot 21 between the adjacent teeth 20. Thus, as the stepping motor 8 moves the cylindrical controller member 7 relatively of the stator 4 to an angular position where the permeable pieces 17 of the cylindrical controller member 7 are astride the slots 21 between the adjacent teeth 20, 20, the magnetic flux lines coming from the permanent-magnet member 5 and entering the teeth 20 through the permeable pieces 17 of the cylindrical controller member 7 are allowed to move uniformly in the circumferential direction.

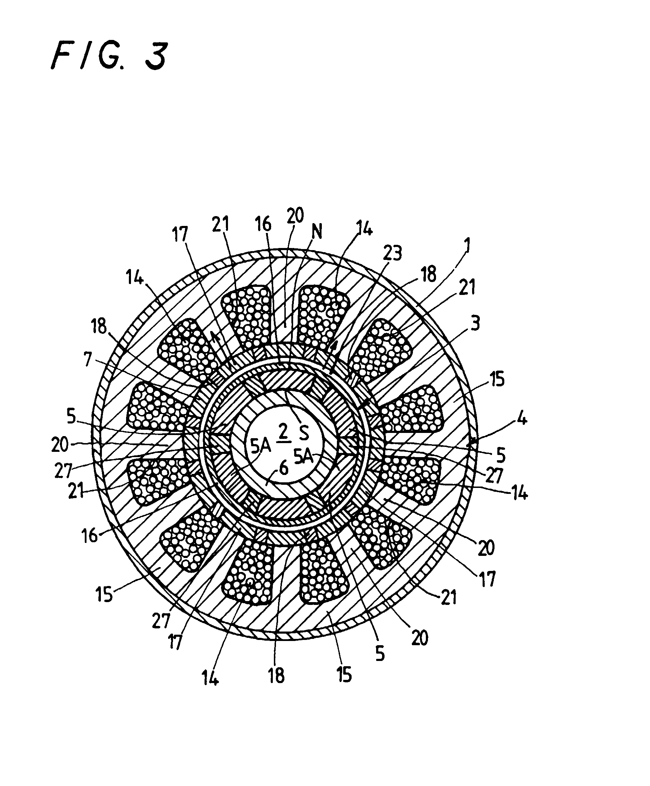

Moreover, as shown in FIG. 3, when the permeable pieces 17 of the cylindrical controller member 7 come in circumferential alignment with the teeth 20 of the stator core 15 while non-permeable pieces 18 of the cylindrical controller member 7 come in nearly centers of the slots 21 of the stator core 15, the rotor 3 is turned due to the magnetic forces coming from and entering the permanent-magnet member 5 through the permeable pieces 17 of the cylindrical controller member 7 and the teeth 20 of the stator core 15.

In accordance with the motor generator of the present invention described above, once the rotor 3 is rotating in either direction, the permeable pieces 17 of the cylindrical controller member 7 are brought into the angular position where they confront the teeth 20 of the stator core 15, each to each tooth, as shown in FIG. 3. In contrast, when the rotor 3 stalls, the permeable pieces 17 of the cylindrical controller member 7 are moved to the angular position where they are astride the slots 21 between the adjacent teeth 20, 20, so that the magnetic flux coming from the permanent-magnet member 5 and entering the teeth 20 is allowed to pass circumferentially of the cylinder controller member 7 with an uniform distribution.

Moreover, the permanent-magnet member 5 is composed of permanent-magnet pieces 5A arranged in the entire form of a hollow cylinder and jointed together by non-magnetic pieces 27 of vitreous substance, which are filled in any boundary of any two adjoining permanent-magnet pieces 5A. The permanent-magnet member 5 is of the form that has radially directed magnet pieces 5A in such a manner that any one pole, N-pole or S-pole, is inside the permanent-magnet member 5 while another pole outside the permanent-magnet member 5 and unlike poles on either magnet piece alternate in polarity (north, south, north, south) circularly around the rotor.

The upward permanent-magnet piece of the permanent-magnet member 5 in FIG. 1 is disposed with the S-pole being inside the curved periphery and the N-pole outside the curved periphery. In contrast, the downward permanent-magnet piece of the permanent-magnet member 5 is disposed with the N-pole being inside the curved periphery and the S-pole outside the curved periphery. Accordingly, the magnetic flux lines produced by the permanent-magnet member 5 are permitted to pass smoothly with looping between the adjacent permanent-magnet pieces 5A.

In the motor generator of the present invention, thus, the circumferential path for the magnetic flux produced by the adjoining permanent-magnet pieces 5A is developed by a loop of magnetic flux coming from and entering any one of the adjoining permanent-magnet pieces 5A through the magnetic path core 6, the associated permeable piece 17 of the cylindrical controller member 7, another of the adjoining permanent-magnet pieces 5A, the stator core 15 of the stator 4 and the adjacent permeable piece 17. The circumferential path for the magnetic flux produced by the adjoining permanent-magnet pieces 5A is also developed by another loop of magnetic flux coming from and entering any one of the adjoining permanent-magnet pieces 5A through the associated permeable piece 17 of the cylindrical controller member 7, the stator core 15 of the stator 4, the adjacent permeable piece 17, another of the adjoining permanent-magnet pieces 15 and the magnetic path core 6.

As the motor generator of the present invention is constructed as described just above, the stepping motor 8 energized under the instructions issued from the controller unit 10 drives the cylindrical controller member 7 to shift selectively the permeable pieces 17 of the cylindrical controller member 7 to either of the situations where they stand nearly the centers of the slots 21 of the stator core 15, or where they stand in circumferential alignment with the teeth 20 of the stator core 15.

The reinforcing member 16 may be made of, for example, reinforcing cylindrical body of amorphous alloys, or reinforcing wires of ceramics or metals such as alloys, which are coated with vitreous material. The reinforcing wires are wound around the periphery of the permanent-magnet member 5 at elevated temperatures and bonded together with vitreous material. Moreover, the reinforcing wires are wound about the periphery of the permanent-magnet member 5 with a slight elongation under tensile force. Cooling the wound wires shrinks the elongation to bond together compressively the wires around the permanent-magnet member 5. The reinforcing material for the reinforcing member 16 may be selected from wires or thin sheet of carbon or metals of non-magnetic property. Moreover, the vitreous material for the reinforcing member 16 may be composed of silicate glasses and/or borosilicate glasses. As an alternative, the reinforcing wires for the reinforcing member 16 may be made of, for example, carbon filaments or ceramics filaments having no magnetism, which are coated with resinous materials.

Moreover, non-magnetic material such as resinous material is injected into all clearances left in the reinforcing member 16 and between the permanent-magnet member 6 and either the adjoining permeable member 5 or the reinforcing member 16 to finish the rotor 3. The non-magnetic pieces 27 to be interposed between the permanent-magnet pieces 5A are composed of, for example, aluminum, austenitic steel, enamels or admixture of iron and copper with glasses such as silicate glasses, borosilicate glasses or the like. To joint together any two adjoining permanent-magnet pieces 5A with the non-magnetic pieces 27 into the permanent-magnet member 5, the admixture for the non-magnetic pieces 27 is, for example, filled together with ceramics such as Al₂O₃ into clearances between any two adjoining permanent-magnet pieces 5A, followed by heating up to 600 °C-300°C.

## Claims

1. A motor generator capable of developing a low torque at high-speed revolutions with no occurrence of cogging, comprising a rotor(3) mounted on a rotor shaft(2) supported for rotation in the frame(1), the rotor(3) being provided with permanent-magnet pieces(5) arranged in juxtaposition around the rotor shaft(2), a stator(4) attached to the frame(1) to surround an outer periphery of the rotor(3), a cylindrical controller member(7) attached to the frame(1) inside the stator(4) for rotation relative to the stator(4), and means for driving the cylindrical controller member(7) with respect to the stator(4) in accord with driving phases of the rotor(3), wherein the stator(4) is made with slots(21) arranged circumferentially, with remaining teeth(20) between the slots(21) in a form of teeth(20) of a comb, and the cylindrical controller member(7) is composed of permeable pieces(17) and non-permeable pieces(18) interposed between the adjoining permeable pieces(17), which are assembled in a form of a cylinder, the permeable pieces (17) each having a circumferential length enough to face the adjoining teeth(20) across the slot between the adjacent teeth(20).

2. A motor generator constructed as defined in claim 1, wherein the cylindrical controller member(7), on starting the rotor(3) to move, is turned in a direction of rotation of the rotor(3) to change a flow of magnetic flux between the permanent-magnet pieces(5) and the stator(4) so as to follow the cylindrical controller member(7) along the direction of the rotation to thereby get the rotor(3) started, and once the rotor(3) is rotating, high-speed revolutions of the rotor(3) is achieved due to variations in magnetic field.

3. A motor generator constructed as defined in claim 1, wherein the cylindrical controller member(7), on stopping the rotor(3) from rotation, is turned in the direction of rotation of the rotor(3) to bring the permeable pieces(17) of the cylindrical controller member (7) into positions where they span across the slots(21) between the adjacent teeth(20) of the stator(4), focussing the magnetic flux coming from the permanent-magnet pieces(5), whereby the rotor(3) is stopped smoothly.

4. A motor generator constructed as defined in claim 1, wherein the rotor(3) has a magnetic path core(6) arranged surrounding an outer periphery of the rotor shaft(2), the magnetic path core(6) being surrounded circularly with the permanent-magnet pieces(5) around the outer periphery thereof, and a reinforcing member(16) mounted surrounding around an outer periphery of the permanent-magnet pieces(5), while the stator(4) has a stator core(15) attached to the frame(1) and provided around an inside periphery thereof with slots(21) so as to leave teeth(20) spaced away from each other, and stator coils(14) wound up on the teeth(20) through the slots(21).

5. A motor generator constructed as defined in claim 4, wherein circumferential lengths of the permeable pieces(17) and non-permeable pieces(18) of the cylindrical controller member(7) are determined so as to ensure that the magnetic flux coming from the permanent-magnet member(5) and entering the teeth(20) of the stator core(15) through non-permeable pieces(18) in the cylindrical controller member(7) becomes nearly equal in magnetic flux density with the magnetic flux entering the teeth(20) of the stator core(15) through the permeable pieces(17) in the cylindrical controller member(7), when the cylindrical controller member(7) comes in a phase where any permeable piece(17) of the cylindrical controller member(7) comes to face any two adjacent teeth (20) of the stator core(15) across any associated slot (21) between the adjacent teeth(20) on starting and stopping the rotation of the rotor(3).

6. A motor generator constructed as defined in claim 4, wherein once the rotor(3) is rotating, the permeable pieces(17) of the cylindrical controller member(7) are brought into a location where they confront the teeth(20) of the stator core(15), allowing the magnetic flux to come from the permanent-magnet pieces(5) and enter the teeth(20) of the stator core(15) through the permeable pieces(17) to thereby help ensure the smooth rotation of the rotor(3).

7. A motor generator constructed as defined in claim 1, wherein the means for driving the cylindrical controller member(7) is comprised of a stepping motor(8) mounted on the frame(1), an output gear(10) attached to an output shaft(25) of the stepping motor(8), and a gear (9) meshed with the output gear(10) and fixed on an outer periphery of an end of the cylindrical controller member (7) extending outwardly from the frame(1).
